# EUROPÄISCHE PATENTSCHRIFT

(11) **EP 3 900 488 B1**
(45) Veröffentlichungstag und Bekanntmachung des Hinweises auf die Patenterteilung: **03.07.2024**
(21) Anmeldenummer: 19817797.4
(22) Anmeldetag: 17.12.2019
(51) Int. Cl.: H05B 45/00

(54) **SCHEINWERFER FÜR KRAFTFAHRZEUGE**
HEADLIGHT FOR MOTOR VEHICLES
PHARES POUR VÉHICULES AUTOMOBILES

(30) Priorität: 19.12.2018 EP 18213894
(43) Veröffentlichungstag der Anmeldung: 27.10.2021
(73) Patentinhaber: ZKW Group GmbH, 3250 Wieselburg (AT)
(72) Erfinder: STEINDL, Günter, 1230 Wien (AT); KOLLER, Jan, 1120 Wien (AT)
(74) Vertreter: Patentanwaltskanzlei Matschnig & Forsthuber OG
(86) Internationale Anmeldenummer: PCT/EP2019/085684
(87) Internationale Veröffentlichungsnummer: WO 2020/127289

(56) Entgegenhaltungen:
- EP-A1- 1 006 506
- WO-A1-2017/190172
- WO-A2-2007/035883
- US-B1- 9 578 701

## Beschreibung

Die Erfindung bezieht sich auf einen Matrixscheinwerfer für Kraftfahrzeuge gemäß dem Oberbegriff von Anspruch 1.

Insbesondere bei Fahrzeugscheinwerfern auf Basis adaptiver LED-Matrix-Systeme verwendet man sogenannte Überbrückungsschalter zum individuellen Dimmen bzw. Kurzschließen einzelner LEDs eines Zweiges. Diese Schalter befinden sich beispielsweise unmittelbar bei den jeweiligen LEDs oder aber auch oft auf einer eigenen Leiterplatte und sie werden über eine Kommunikationsschnittstelle von einer Steuereinheit angesteuert.

Kern einer Steuereinheit ist meist ein sogenannter Matrix-IC, in welchen auch die oben genannten Überbrückungsschalter integriert sein können. Die Speisung der einzelnen Zweige, welche auch Stränge genannt werden können, erfolgt mit Hilfe hysteretisch geregelter Tiefsetzsteller (Abwärtsregler), die als hochdynamische Stromquellen ausgebildet sind. Die einzelnen Tiefsetzsteller werden von einer gemeinsamen Zwischenkreisspannung versorgt, deren Spannungswert zumindest der Summe aller Flussspannungen der in Serie geschalteten LEDs jenes Zweiges mit der größten Anzahl von LEDs entsprechen muss, wobei in der Praxis oft jeder Zweig die gleiche Anzahl an LEDs aufweist.

Die Steuereinheit steuert die Schalter in Abhängigkeit von einem gewünschten Lichtbild im Sinne einer Pulsweitenmodulation an, wobei es empfehlenswert ist, innerhalb einer PWM-Periode die Schaltzeitpunkte der LEDs eines Zweiges gegeneinander zu versetzen.

Die Zwischenkreisspannung, die beispielsweise in einem Bereich von 12 bis 42 Volt, aber auch darunter oder darüber liegen kann, wird von einer geregelten bzw. gesteuerten Spannungsversorgung bereitgestellt, meist einem Hochsetzsteller (Aufwärtsregler). Die Eingangsspannung dieser Spannungsversorgung kann beispielsweise die Bordspannung des Kraftfahrzeuges sein. Im Laufe der sich dynamisch ändernden Lichtverteilung eines Scheinwerfers wird vor allem bei Lichtszenarien, bei welchen im Mittel nur wenige LEDs der Zweige aktiv und die restlichen LEDs überbrückt sind, die Spannungsversorgung, welche die Zwischenkreisspannung erzeugt, stärker belastet, was auch für die den jeweiligen Zweigstrom liefernden und regelnden Tiefsetzsteller zutrifft. Man kann das Problem auch so beschreiben, dass in vielen Fällen die Zwischenkreisspannung auch bei einem Versetzen der Schaltzeitpunkte unnötig hoch ist, in anderen Fällen, in welchen sämtliche LEDs eines Zweiges leuchten sollen, jedoch die hohe Zwischenkreisspannung benötigt wird.

Dokument US 9578701 B1 zeigt eine Vorrichtung umfassend eine Vielzahl an LED-Strängen sowie Konverter zur Anspeisung der LED-Stränge. Dokument WO 2007/035883 A2 zeigt eine LED-Treiberschaltung. Dokument EP 1006 506 A1 zeigt ein Fahrzeugdisplay umfassend gesteuerte LEDs. Dokument WO 2017/190172 A1 zeigt eine Kraftfahrzeugbeleuchtungseinrichtung mit zumindest einem Zweig LED-Lichtquellen.

Eine Aufgabe der Erfindung liegt darin, eine Lösung anzugeben, welche dem oben genannten Problem entgegenwirkt und dadurch eine geringere Belastung der Stromversorgungen ermöglicht sowie den Energieverbrauch verringert.

Diese Aufgabe wird mit einem Matrixscheinwerfer der eingangs genannten Art gelöst, der erfindungsgemäß die kennzeichnenden Merkmale von Anspruch 1 umfasst.

Dank der Erfindung können Verluste in dem Scheinwerfer minimiert werden, d.h. es lässt sich ein hoher Wirkungsgrad erzielen.

Da die Temperatur der LEDs bzw. deren Module eine große Rolle bei der möglichen Optimierung des Wirkungsgrades spielt, kann es von Vorteil sein, wenn in einem Speicher der Steuereinheit ein Zusammenhang zwischen der der Temperatur eines zumindest eine LED-umfassenden LED-Moduls und der Flussspannung einer LED abgespeichert ist, der Steuereinheit der jeweils aktuelle Wert der Temperatur des LED-Moduls zugeführt ist, und die Steuereinheit dazu eingerichtet ist, nach Zugriff auf den Speicher, in dem ein Zusammenhang zwischen der Temperatur eines LED-Moduls und der Flussspannung einer LED abgespeichert ist, eine der Temperatur entsprechende Korrektur der Befehle bezüglich der Zwischenkreisspannung vornehmen.

Eine vorteilhafte Weiterbildung zeichnet sich dadurch aus, dass die Spannungsversorgung als Hochsetzsteller ausgebildet ist.

Die Erfindung ist im Folgenden an Hand beispielsweiser Ausführungsformen näher beschrieben, welche zusammen mit anderen Darstellungen des technischen Gebietes in der Zeichnung veranschaulicht sind. In dieser zeigen
Fig. 1 ein Prinzipschaltbild einer Stromversorgung für LED-Zweige eines adaptiven Scheinwerfers,
Fig. 2 ein Spannungs- und Schaltdiagramm der Ansteuerung eines Zweiges mit zeitlich äquidistant verteilten Schaltzeitpunkten und gleichen Tastgraden (duty cycles),
Fig. 3 ein Spannungs- und Schaltdiagramm entsprechend der Fig. 2 jedoch mit unterschiedlichen Tastgraden (duty cycles),
Fig. 4 eine beispielsweise, abgespeicherte Abhängigkeit der anzunehmenden Flussspannung Vf in Abhängigkeit von der Temperatur Tm eines LED-Moduls und
Fig. 5 ein Ablaufdiagramm, welches sich auf eine beispielsweise erfindungsgemäße Funktion der Steuereinheit bezieht.

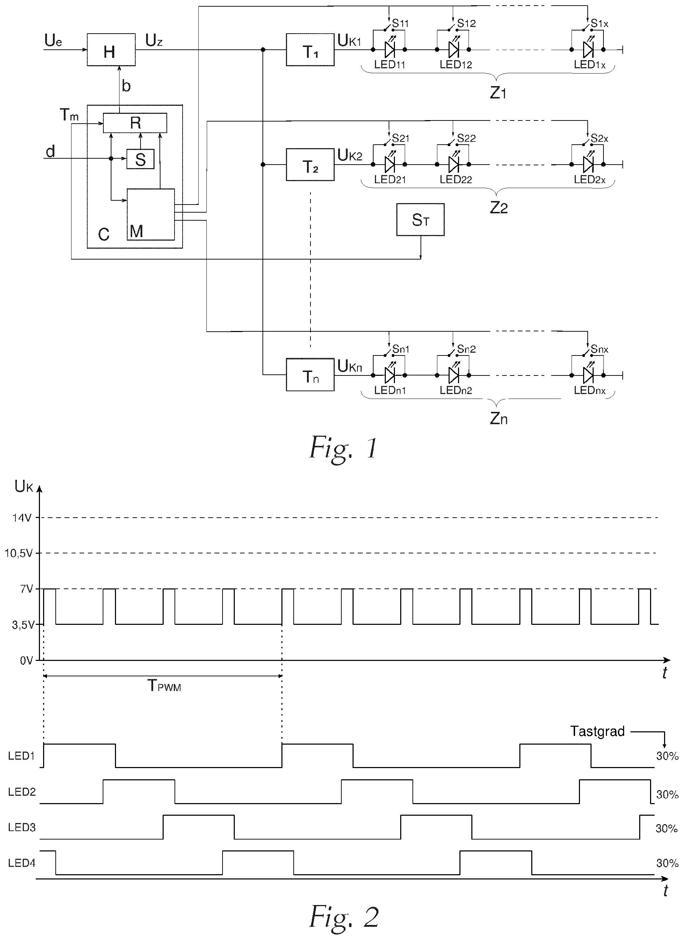

Gemäß Fig. 1 ist eine Anzahl n von LED-Zweigen Z1, Z2, Zn, in dem gezeigten Beispiel sind der Einfachheit halber bloß drei Zweige dargestellt, ausgehend von einer Eingangsspannung **Ue**, welche beispielsweise die Bordspannung des Kraftfahrzeuges sein kann, mit Strom zu versorgen. Jeder der Zweige Z1, Z2, Zn besteht aus der Serienschaltung einer Anzahl x von LEDs, wobei als Beispiel wiederum der Einfachheit halber lediglich drei **LEDs LED11...LED1x; LED21...LED2x; LED31...LED3x** gezeigt sind. Im Beispiel enthalten die Zweige Z1, Z2, Zn je gleich viele LEDs, nämlich x LEDs, die LED Anzahl je Zweig könnte aber unterschiedlich sein.

Im vorliegenden Beispiel bilden die insgesamt n.x-LEDs die Matrix eines Scheinwerfers, der auf Basis adaptiver LED-Matrix-Systeme arbeitet.

In jedem Zweig können LEDs, zumindest eine LED je Zweig, von Schaltern überbrückt sein, in diesem Fall sind alle LEDs eines Zweiges je von einem Schalter **S11...S1x; S21...S2x**; Sn1...Snx überbrückbar, d.h. der entsprechenden LED ist ein Schalter parallelgeschaltet. Die Schalter, sogenannte Überbrückungsschalter, dienen zum individuellen Dimmen bzw. Kurzschließen einzelner LEDs eines Zweiges. Die Schalter befinden sich beispielsweise unmittelbar bei den jeweiligen LEDs oder aber auch oft auf einer eigenen Leiterplatte und sie werden über eine Kommunikationsschnittstelle von einer Steuereinheit angesteuert.

Jeder LED-Zweig Z1, Z2, Zn wird von einem ihm zugeordneten Tiefsetzsteller **T1, T2, Tn** gespeist, wobei die Tiefsetzsteller hysteretisch geregelter Tiefsetzstelle (Abwärtsregler) sind, die als hochdynamische Stromquellen ausgebildet sind und eingangsseitig an einer gemeinsamen Zwischenkreisspannung **Uz** liegen, welche von einer an der Eingangsspannung **Ue** liegenden Spannungsversorgung **H** erzeugt wird.

Des Weiteren ist eine Steuereinheit C vorgesehen ist, welche in Abhängigkeit von einem gewünschten Lichtbild des Scheinwerfers zur Ansteuerung der Schalter S11...S1x; S21...S2x; Sn1...Snx im Sinne einer Pulsweitenmodulation eingerichtet ist, wobei innerhalb einer PWM-Periode die Schaltzeitpunkte der LEDs eines Zweiges gegeneinander versetzt sind, was weiter unten näher gezeigt und erläutert wird.

Kern der Steuereinheit C ist ein sogenannter Matrix-IC, in Fig. 1 mit M bezeichnet, in welchen auch die Überbrückungsschalter integriert sein können, die hier jedenfalls zur klareren Darstellung bei den zugehörigen LEDs eingezeichnet sind. Die Zwischenkreisspannung, welche alles Tiefsetzsteller gemeinsamen versorgt, besitzt einen Spannungswert, welcher zumindest der Summe aller Flussspannungen der in Serie geschalteten LEDs jenes Zweiges mit der größten Anzahl von LEDs entsprechen muss, wobei in der Praxis oft jeder Zweig die gleiche Anzahl an LEDs aufweist.

Die Zwischenkreisspannung Uz, in einem Bereich von beispielsweise 12 bis 42 Volt, wird in Abhängigkeit von der höchsten LED-Anzahl in einem Zweig gewählt und sie wird von einer geregelten bzw. gesteuerten Spannungsversorgung **H**, meist einem Hochsetzsteller (Aufwärtsregler), bereitgestellt. Die Eingangsspannung Ue dieser Spannungsversorgung kann beispielsweise die Bordspannung des Kraftfahrzeuges sein.

Seitens des Fahrzeuges bzw. deren Elektronik werden der Steuereinheit ständig Anforderungssignale **d** zugeführt, welche das aktuelle gewünschte Lichtbild betreffen. Im Laufe der sich dynamisch ändernden Lichtverteilung des Scheinwerfers wird vor allem bei Lichtszenarien, bei welchen im Mittel nur wenige LEDs der Zweige aktiv und die restlichen LEDs überbrückt sind, die Spannungsversorgung, welche die Zwischenkreisspannung Uz erzeugt, stärker belastet, was auch für die den jeweiligen Zweigstrom liefernden und regelnden Tiefsetzsteller T1, T2, Tn zutrifft. Mit anderen Worten ist in vielen Fällen die Zwischenkreisspannung Uz unnötig hoch, doch wird in Fällen, in welchen sämtliche LEDs eines Zweiges leuchten sollen, die hohe Zwischenkreisspannung Uz benötigt. Die an der gesamten Serienschaltung von LEDs eines Zweiges ist in Fig. 1 mit **Uk1, Uk2, Ukn** bezeichnet.

**Fig. 2** zeigt ein Spannungs- und Schaltdiagramm der Ansteuerung eines Zweiges mit vier in Serie geschalteten LEDs mit zeitlich äquidistant verteilten Schaltzeitpunkten. Zur Vereinfachung wird in diesem und in folgenden Beispielen eine Flussspannung (Vorwärtsspannung) von 3,5 V angenommen, wobei die Flussspannung bei derzeit am Markt befindlichen LEDs je nach Type (insbesondere der Farbe, IR, UV) etwa zwischen 1,2 bis 4,5 V liegt. Bei einem Zweig mit vier nicht kurzgeschlossenen, d.h. durch Schalter überbrückten LEDs, läge die maximal erforderliche Zweigspannung somit bei 4*3,5 = 14 V. In Fig.2 sind die vier LEDs mit LED1 bis LED4 bezeichnet.

Das obere Diagramm der Fig. 2 zeigt den zeitlichen Verlauf der Spannung Uk des Zweiges mit den vier LEDs für eine PWM-Periode und in dem unteren Diagramm sind die zugehörigen Schaltzustände der vier LEDs gezeigt, wobei man erkennt, dass jede LED mit einem Tastgrad (Duty Cycle) von 30% geschaltet wird und die Schaltzeitpunkte der LEDs gleichmäßig zeitlich versetzt sind. Man erkennt, dass man bei Wahl geeigneter Schaltzeitpunkte maximal eine Zweigspannung Uk von 7,5 V benötigt. Lägen die Schaltzeitpunkte hingegen stochastisch verteilt, wäre jedenfalls zu bestimmten Zeiten die maximale Zweigspannung von 14 V (strichlierte Linie) erforderlich.

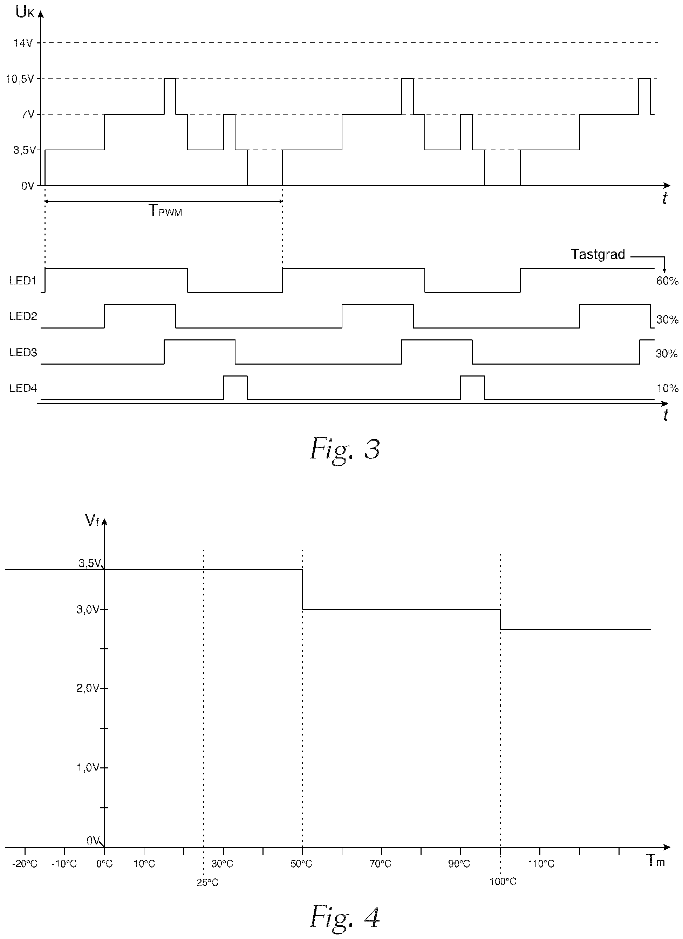

Fig. 3 zeigt eine Darstellung analog zu Fig. 3 jedoch mit unterschiedlichem Tastgrad (Duty Cycle) der einzelnen LEDs innerhalb einer PWM-Periode, was bedeutet, dass die vier LEDs unterschiedlich gedimmt werden und daher unterschiedlich hell erscheinen. In dem gezeigten Beispiel wird für einen kurzen Zeitraum eine Zweigspannung Uk von 10,5 V benötigt, ein Wert, der aber noch immer unterhalb der Maximalspannung von 14 V liegt.

Die Erfindung geht nun davon aus, die Anzahl der maximal eingeschalteten LEDs der einzelnen Zweige vorherzusagen, daraus die maximal benötigte Zweigspannung der einzelnen Zweige zu bestimmen und dementsprechend die Zwischenkreisspannung Zu einzustellen. Dies wird im Folgenden näher erläutert.

Zum Erzeugen eines gewünschten Lichtbildes mit einem Matrixscheinwerfer werden einzelne Bereiche des Lichtbildes ausgeblendet bzw. Segmente der LED-Matrix abgeschaltet oder gedimmt. Dies ist z.B. bei besonderen Ausleuchtungen des Verkehrsraums oder beim gezielten Ausblenden eines kleinen Bereiches, der einen entgegenkommenden Verkehrsteilnehmer oder einen Fußgänger betrifft, der Fall und dementsprechend werden die Überbrückungsschalter der LEDs angesteuert. Wie bereits oben erwähnt, werden die erforderlichen Anforderungssignale d der Steuerueinheit ständig seitens des Fahrzeuges zugeführt.

In der Steuereinheit C ist eine Zuordnung der von den LEDs des Matrixscheinwerfers zu beleuchtenden Raumwinkeln in einem Speicher **S** hinterlegt, wobei diese Zuordnung eine spezifische für jeden Scheinwerfer ist. Aus dieser aus dem Speicher S stammenden Information in Kombination mit der in dem Matrix-IC M vorhandenen Information der LED-Zuordnung zu den jeweiligen Überbrückungsschaltern und dem jeweiligen Tastgrad, welcher die Helligkeit der einzelnen LEDs im Fall des Dimmens bestimmt, ergibt sich die maximale Anzahl der jeweils aktiven LEDs eines Zweiges und somit auch die maximal auftretende Flussspannung dieses Zweiges. Wenn diese Berechnung nach einem dafür geeigneten Algorithmus nun für alle LED-Zweige erfolgt, kann man daraus den LED-Zweig mit den meisten aktiven LEDs bestimmen, welcher demnach die minimal notwendige Zwischenkreisspannung vorgibt. Diese Information, die z.B. in einer Recheneinheit **R** ermittelt werden kann und in Fig. 1 durch ein Befehlssignal **b** angedeutet ist, wird dem Hochsetzsteller H zugeführt, der sodann dynamisch auf den jeweils erforderlichen Wert der Zwischenkreisspannung Uz eingestellt wird.

Eine weitere Verbesserung der erfindungsgemäßen Lösung lässt sich erreichen, wenn man berücksichtigt, dass sich die Flussspannung mit der Temperatur, genauer gesagt der Sperrschichttemperatur ändert, wobei eine Temperaturabsenkung zu einer Erhöhung der Flussspannung führt. Da man die Sperrschichttemperatur nicht unmittelbar erfassen kann, misst man die Temperatur beispielsweise der LED-Module an geeigneter Stelle, wobei man den aufbauspezifischen Zusammenhang zwischen der Flussspannung und der gemessenen Temperatur experimentell annähernd bestimmen kann. Bei niedrigen Temperaturen muss man vom der höchsten Flussspannung (worst case) ausgehen, bei höheren Temperaturen kann eine niedrigere Flussspannung angenommen werden. Man legt z.B. in einem Speicherbaustein der Steuereinheit C eine Zuordnung der Flussspannung **Vf** zu der Temperatur **Tm** des LED-Moduls fest und kann dann in der Steuereinheit C eine der Temperatur entsprechende Korrektur der Befehle b bezüglich der Zwischenkreisspannung Uz vornehmen. Fig. 1 zeigt schematisch einen Temperatursensor **ST,** welcher einem LED-Modul zugeordnet ist. Unter dem Begriff LED-Modul ist im Zusammenhang mit dieser Erfindung eine einzelne LED-Anordnung, z.B. LED und Kühlkörper, oder die Anordnung einer Kette von LEDs oder auch eine gesamte LED-Matrix zu verstehen. Wesentlich ist jedenfalls, dass der Temperatursensor eine für die LED-Temperatur repräsentative Größe liefert, wobei der Temperatursensor auch mehrere Sensoren umfassen kann, um einen Mittelwert der nicht gleichen Temperaturen einzelner LED-Module zu erfassen. Bei einem gemeinsamen Kühlkörper kann auch die Temperatur dieses Kühlkörpers erfasst werden. **Fig. 4** zeigt ein Beispiel für eine abgespeicherte Abhängigkeit der anzunehmenden Flussspannung Vf in Abhängigkeit von der Temperatur Tm eines LED-Moduls.

Es sollte dem Fachmann klar sein, dass die in Fig. 1 in den Block der Steuereinheit C eingezeichneten weiteren Blöcke, nämlich die Recheneinheit R, der Speicher S und der Matrix-IC M in erster Linie als Funktionsblöcke und nicht notwendigerweise als physisch vorhandene getrennte Einheiten anzusehen sind. Tastsächlich könnte die Steuereinheit C auch als "Ein-Chip"-Lösung aufgebaut sein.

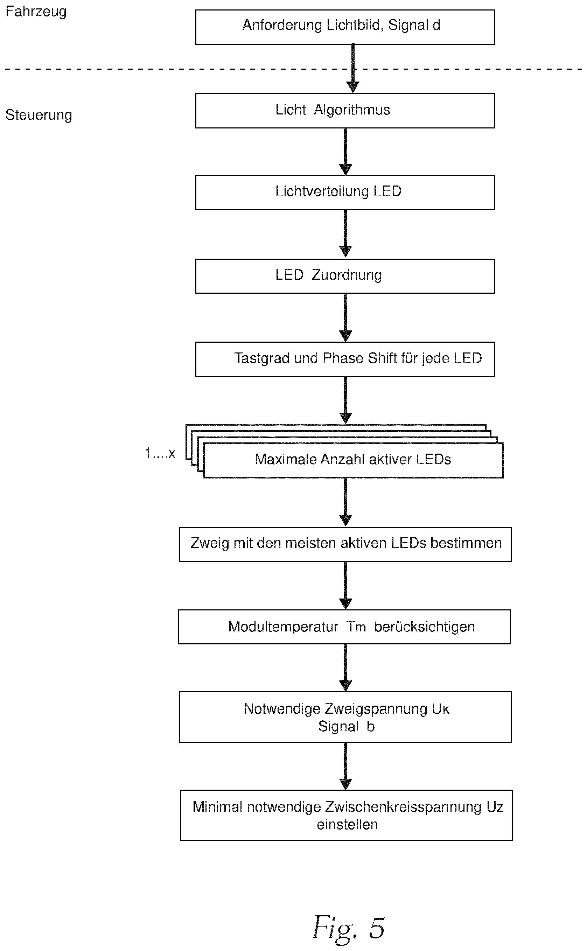

Die oben beispielsweise beschriebene erfindungsgemäße Funktion der Steuereinheit C ist in dem Ablaufdiagramm der **Fig. 5** gezeigt. Seitens des Fahrzeuges erfolgt an die Steuereinheit C über das Signal d eine Anforderung für ein bestimmtes Lichtbild, das auf der Fahrbahn erzeugt werden soll. Dem vorhandenen Algorithmus entsprechend wird sodann anhand der Lichtverteilung der LEDs die LED-Zuordnung für das gewünschte Lichtbild ermittelt sowie der Tastgrad und die Phasenverschiebung (Phase Shift) für jede LED. Man erhält für jeden Zweig 1... x die maximale Anzahl aktiver LEDs und es wird jener Zweig mit den meisten aktiven LEDs ermittelt. Es kann nun die Modultemperatur Tm berücksichtigt werden und in der Folge die notwendige Zweigspannung Uk, vorauf das Befehlssignal b für die Spannungsversorgung H abgegeben wird.

## Patentansprüche

1. Matrixscheinwerfer für Kraftfahrzeuge, wobei der Matrixscheinwerfer Folgendes umfasst:
- zumindest zwei LED-Zweige (Z1, Z2, Zn), von welchen jeder eine Serienschaltung von LEDs (LED11...LED1x; LED21... LED2x; LEDn1...LED3x) aufweist,
- gesteuerte Schalter (S11...S1x; S21...S2x; Sn1...Snx), wobei zumindest eine LED jedes Zweiges von einem der gesteuerten Schalter (S11...S1x; S21...S2x; Sn1...Snx) überbrückbar ist,
- Tiefsetzsteller (T1, T2, Tn), wobei jeder LED-Zweig (Z1, Z2, Zn) von einem ihm zugeordneten der Tiefsetzsteller (T1, T2, Tn) gespeist wird, wobei die Tiefsetzsteller als Konstantstromquellen ausgebildet sind und eingangsseitig an einer gemeinsamen Zwischenkreisspannung (Uz) liegen,
- wobei die Zwischenkreisspannnung (Uz) von einer an einer Eingangsspannung (Ue) liegenden Spannungsversorgung (H) erzeugt wird, **dadurch gekennzeichnet, dass**
der Matrixscheinwerfer eine Steuereinheit (C) umfasst, welche in Abhängigkeit des gewünschten Lichtbilds zur pulsweitenmodulierten Ansteuerung der Schalter (S11...S1x; S21...S2x; Sn1...Snx) eingerichtet ist, wobei innerhalb einer PWM-Periode die Schaltzeitpunkte der LEDs (LED11...LED1x; LED21...LED2x; LEDn1...LEDnx) eines Zweiges gegeneinander gleichmäßig zeitlich versetzt sind, dass **d**ie Steuereinheit (C) einen Speicher (S) sowie einen Matrix-IC (M) aufweist, in welchem Speicher eine Zuordnung der LEDs (LED11...LED1x; LED21...LED2x; LEDn1...LEDnx) des Matrixscheinwerfers von den LEDs (LED11... LED1x; LED21...LED2x; LEDn1...LEDnx) zu beleuchtenden Raumwinkeln hinterlegt ist,
dass der Steuereinheit (C) Anforderungssignale (d) betreffend ein gewünschtes Lichtbild zugeführt sind, und die Steuereinheit (C) dazu eingerichtet ist, aus der aus dem Speicher (S) stammenden Information betreffend die Zuordnung der LEDs (LED11...LED1x; LED21... LED2x; LEDn1...LEDnx) zu den Raumwinkeln in Kombination mit einer in dem Matrix-IC (M) vorhandenen Information der Zuordnung der LEDs zu ihrem jeweiligen angesteuerten Schaltern (S11...S1x; S21...S2x; Sn1...Snx) und ihrem Tastgrad, welcher die Helligkeit der einzelnen LEDs bestimmt, die maximale Anzahl der aktiven LEDs jedes Zweiges (Z1, Z2, Zn) und somit auch die maximal auftretende Flussspannung dieser Zweige (Z1, Z2, Zn) zu berechnen und daraus den LED-Zweig mit den meisten aktiven LEDs zu bestimmen, welcher Zweig die minimal notwendige Zwischenkreisspannung (Uz) vorgibt und die Information betreffend den die minimal notwendige Zwischenkreisspannung (Uz) bestimmenden LED-Zweig als Befehlssignal (b) der Spannungsversorgung (H) zuzuführen, um die Spannungsversorgung (H) dynamisch zur Ausgabe der minimal notwendigen Zwischenkreisspannung (Uz) einzustellen.

2. Matrixscheinwerfer nach Anspruch 1, **dadurch gekennzeichnet, dass** in dem Speicher (S) der Steuereinheit (C) ein Zusammenhang zwischen der der Temperatur (Tm) eines zumindest eine LED des Matrixscheinwerfers umfassenden LED-Moduls und der Flussspannung (Vf) dieser LED abgespeichert ist, der Steuereinheit (C) der jeweils aktuelle Wert der Temperatur des LED-Moduls zugeführt ist, und die Steuereinheit (C) dazu eingerichtet ist, nach Zugriff auf den Speicher (T), in dem ein Zusammenhang zwischen der Temperatur eines LED-Moduls und der Flussspannung (Vf) einer LED abgespeichert ist, eine der Temperatur entsprechende Korrektur der Befehle (b) bezüglich der Zwischenkreisspannung (Uz) vornehmen.

3. Matrixscheinwerfer nach Anspruch 1 oder 2, **dadurch gekennzeichnet, dass** die Spannungsversorgung (H) als Hochsetzsteller ausgebildet ist.

## Claims

1. Matrix headlamp for motor vehicles, the matrix headlamp comprising
- at least two LED branches (Z1, Z2, Zn), each of which has a series connection of LEDs (LED11...LED1x; LED21...LED2x; LEDn1...LED3x),
- controlled switches (S11...S1x; S21...S2x; Sn1...Snx), wherein at least one LED of each branch can be bypassed by one of the controlled switches (S11...S1x; S21...S2x; Sn1...Snx),
- buck converters (T1, T2, Tn), wherein each LED branch (Z1, Z2, Zn) is supplied by one of the buck converters (T1, T2, Tn) assigned to it, wherein the buck converters are designed as constant current sources and are connected on the input side to a common intermediate circuit voltage (Uz),
- wherein the intermediate circuit voltage (Uz) is generated by a voltage supply (H) connected to an input voltage (Ue), **characterized in that**
the matrix headlamp comprises a control unit (C) which, as a function of the desired light image, activates the switches (511... S1x; S21...S2x; Sn1...Snx) as a function of the desired light image, the switching times of the LEDs (LED11...LED1x; LED21...LED2x; LEDn1...LEDnx) of a branch being uniformly offset in time relative to one another within a PWM period, **in that** the control unit (C) has a memory (S) and a matrix IC (M), in which memory an assignment of the LEDs (LED11... LED1x; LED21...LED2x; LEDn1...LEDnx) of the matrix headlight is stored by the LEDs (LED11...LED1x; LED21...LED2x; LEDn1...LEDnx) to spatial angles to be illuminated,
**in that** the control unit (C) is supplied with request signals (d) relating to a desired light image, and the control unit (C) is set up to determine from the information originating from the memory (S) relating to the assignment of the LEDs (LED11...LED1x; LED21...LED2x; LEDn1...LEDnx) to the solid angles in combination with information present in the matrix IC (M) of the assignment of the LEDs to their respective activated switches (S11... S1x; S21...S2x; Sn1... Snx) and their duty cycle, which determines the brightness of the individual LEDs, to calculate the maximum number of active LEDs of each branch (Z1, Z2, Zn) and thus also the maximum occurring flux voltage of these branches (Z1, Z2, Zn) and from this to determine the LED branch with the most active LEDs, which branch specifies the minimum necessary DC link voltage (Uz) and to supply the information relating to the LED branch determining the minimum necessary DC link voltage (Uz) as a command signal (b) to the power supply (H) in order to dynamically adjust the power supply (H) to output the minimum necessary DC link voltage (Uz).

2. Matrix headlamp according to claim 1, **characterized in that** a relationship between the temperature (Tm) of an LED module comprising at least one LED of the matrix headlamp and the flux voltage (Vf) of this LED is stored in the memory (S) of the control unit (C), the control unit (C) is supplied with the respective current value of the temperature of the LED module, and the control unit (C) is set up, after accessing the memory (T) in which a relationship between the temperature of an LED module and the flux voltage (Vf) of an LED is stored, to carry out a correction of the commands (b) corresponding to the temperature with respect to the DC link voltage (Uz).

3. Matrix headlamp according to claim 1 or 2, **characterized in that** the voltage supply (H) is designed as a boost converter.

## Revendications

1. Projecteurs matriciels pour véhicules automobiles, le projecteur matriciel comprenant :
- au moins deux branches de LED (Z1, Z2, Zn), dont chacune comprend une connexion en série de LED (LED 11 ... LEDlx ; LED21...LED2x ; LEDn1...LED3x),
- des commutateurs commandés (S11...S1x ; S21...S2x ; Sn1...Snx), au moins une LED de chaque branche pouvant être pontée par l'un des commutateurs commandés (S11...S1x ; S21...S2x ; Sn1...Snx),
- des convertisseurs abaisseurs (T1, T2, Tn), chaque branche de DEL (Z1, Z2, Zn) étant alimentée par l'un des convertisseurs abaisseurs (T1, T2, Tn) qui lui est associé, les convertisseurs abaisseurs étant conçus comme des sources de courant constant et étant raccordés côté entrée à une tension de circuit intermédiaire (Uz) commune,
- la tension de circuit intermédiaire (Uz) étant générée par une alimentation en tension (H) appliquée à une tension d'entrée (Ue), **caractérisé en ce que**
le projecteur matriciel comprend une unité de commande (C) qui, en fonction de l'image lumineuse souhaitée, commande par modulation de largeur d'impulsion les commutateurs (S11... S1x; S21...S2x ; Sn1...Snx), les moments de commutation des LED (LED11...LED1x ; LED21...LED2x ; LEDn1...LEDnx) d'une branche étant décalés régulièrement dans le temps les uns par rapport aux autres à l'intérieur d'une période PWM, **en ce que** l'unité de commande (C) présente une mémoire (S) ainsi qu'un circuit intégré matriciel (M), dans lequel une affectation des LED (LED11...LED1x ; LEDn1...LEDnx) est enregistrée du projecteur matriciel est mémorisée par les LED (LED11...LED1x ; LED21...LED2x ; LEDn1...LEDnx) à des angles solides à éclairer,
**en ce que** des signaux de demande (d) concernant une image lumineuse souhaitée sont amenés à l'unité de commande (C), et l'unité de commande (C) est conçue pour, à partir de l'information provenant de la mémoire (S) concernant l'affectation des LED (LED11...LED1x ; LED21...LED2x ; LEDn1...LEDnx) aux angles solides, en combinaison avec une information présente dans le circuit intégré matriciel (M) de l'affectation des LED à leurs commutateurs commandés respectifs (S11... S1x ; S21...S2x ; Sn1... Snx) et de leur cycle de service, qui détermine la luminosité de chaque LED, de calculer le nombre maximal de LED actives de chaque branche (Z1, Z2, Zn) et donc aussi la tension de flux maximale apparaissant dans ces branches (Z1, Z2, Zn) et de déterminer à partir de là la branche de LED avec le plus de LED actives, cette branche détermine la tension de circuit intermédiaire (Uz) minimale nécessaire et d'envoyer l'information concernant la branche de DEL déterminant la tension de circuit intermédiaire (Uz) minimale nécessaire comme signal de commande (b) de l'alimentation en tension (H), afin de régler dynamiquement l'alimentation en tension (H) pour délivrer la tension de circuit intermédiaire (Uz) minimale nécessaire.

2. Projecteur matriciel selon la revendication 1, **caractérisé en ce que** dans la mémoire (S) de l'unité de commande (C) est mémorisée une relation entre la température (Tm) d'un module LED comprenant au moins une LED du projecteur matriciel et la tension de flux (Vf) de cette LED, l'unité de commande (C) est alimentée avec la valeur actuelle respective de la température du module LED, et l'unité de commande (C) est conçue pour, après accès à la mémoire (T) dans laquelle est enregistrée une relation entre la température d'un module LED et la tension de flux (Vf) d'une LED, effectuer une correction des instructions (b) correspondant à la température en ce qui concerne la tension du circuit intermédiaire (Uz).

3. Projecteur matriciel selon la revendication 1 ou 2, **caractérisé en ce que** l'alimentation en tension (H) est conçue comme un convertisseur élévateur.
